# EUROPÄISCHE PATENTSCHRIFT

(11) **EP 3 529 818 B1**
(45) Veröffentlichungstag und Bekanntmachung des Hinweises auf die Patenterteilung: **28.10.2020**
(21) Anmeldenummer: 17777584.8
(22) Anmeldetag: 29.09.2017
(51) Int. Cl.: H01H 9/54, H02H 3/02, H02H 3/08, H02H 7/22

(54) **NIEDERSPANNUNGS-SCHUTZSCHALTGERÄT**
LOW-VOLTAGE CIRCUIT BREAKER DEVICE
DISJONCTEUR BASSE TENSION

(30) Priorität: 21.10.2016 DE 102016120071
(43) Veröffentlichungstag der Anmeldung: 28.08.2019
(73) Patentinhaber: Eaton Intelligent Power Limited, Dublin 4 (IE)
(72) Erfinder: ASKAN, Kenan, Vienna 1090 (AT)
(74) Vertreter: Eaton IP Group EMEA
(86) Internationale Anmeldenummer: PCT/EP2017/074914
(87) Internationale Veröffentlichungsnummer: WO 2018/072984

(56) Entgegenhaltungen:
- AT-A1- 515 440
- DE-A1-102010 000 082
- DE-A1-102014 108 657

## Beschreibung

Die Erfindung betrifft ein Niederspannungs-Schutzschaltgerät gemäß dem Oberbegriff des Patentanspruches 1.

Es ist ein entsprechendes Schutzschaltgerät aus der WO 2015/028634 A1 der Anmelderin bekannt. Beim Ausschalten des Schutzschaltgeräts wird dabei erst der Bypassschalter geöffnet, wobei ein Lichtbogen entsteht, und der Strom auf die Halbleiterschaltungsanordnung kommutiert. Nachfolgend wird die, zuvor eingeschaltete, Halbleiterschaltungsanordnung ausgeschaltet und die Trennkontakte zum Bereiststellen der galvanischen Trennung, welche Trennkontakte in Serie zum Bypassschalter geschaltet sind, werden geöffnet.

Bei der praktischen Umsetzung dieses Konzepts in realen Schaltern wurde die Halbleiterschaltungsanordnung in herkömmlicher Weise mit IGBT-Leistungsmodulen aufgebaut. Es hat sich diesbezüglich als nachteilig herausgestellt, dass es bei derartigen Schaltgeräten zu hohen Belastungen der Kontakte des Bypassschalters beim Abschalten eines Kurzschlussstromes kommt. Ebenso werden bei diesen Schaltgeräten die Halbleiter der Halbleiterschaltungsanordnung sehr stark beansprucht, wodurch die Lebensdauer bzw. die Anzahl möglicher Schaltzyklen limitiert wird.

Die DE 10 2014 108 657 A1 beschreibt das allgemeine Konzept eines hybriden Niederspannungs-Schutzschaltgeräts.

Aus der AT 515 440 A1 geht eine Anordnung diskreter Halbleiterbauteile hervor, welche paarweise an einem Kühlsystem angeordnet sind.

Die DE 10 2010 000 084 A1 offenbart eine Schaltungsanordnung eines elektronischen Schutzschalters einer Energieerzeugereinheit.

Aufgabe der Erfindung ist es daher ein Schutzschaltgerät der eingangs genannten Art anzugeben, mit welcher die genannten Nachteile vermieden werden können, welches eine geringe Baugröße aufweist, welches hohe Nenn- bzw. Dauerströme ermöglicht, welches ein hohes Abschaltvermögen aufweist und über eine lange Zeit eine hohe Zuverlässigkeit aufweist.

Erfindungsgemäß wird dies durch die Merkmale des Patentanspruches 1 erreicht.

Dadurch kann ein Niederspannungs-Schutzschaltgerät geschaffen werden, welches eine geringe Belastung der Bauteile, insbesondere des Bypassschalters sowie der Halbleiterschaltungsanordnung, und über eine lange Zeit eine hohe Zuverlässigkeit aufweist. Es hat sich gezeigt, dass für das Schaltvermögen insbesondere die Zeit relevant ist, welche der Kurzschlussstrom benötigt um während des Öffnens des Bypassschalters auf die Halbleiterschaltungsanordnung zu kommutieren. Diese Zeit sollte dabei möglichst kurz sein. Für diese sog. Kommutierungszeit ist insbesondere die Geschwindigkeit relevant mit der die Kontakte des Bypassschalters öffnen sowie die relevante Schleifeninduktanz des Niederspannungs-Schutzschaltgeräts. Die Schleifeninduktanz wird jedoch maßgeblich durch den realen Aufbau bzw. die Abstände innerhalb des realen Niederspannungs-Schutzschaltgeräts bestimmt. Bekannte Umsetzungen solcher Niederspannungs-Schutzschaltgeräte mit IGBT-Leistungsmodulen weisen einen Aufbau auf, bei welchem die Halbleiterbauteile einseitig auf einem Träger angeordnet sind. Dies führt nicht nur zu langen Leitungswegen- und Schleifen, mit der entsprechenden Verlängerung der Kommutierungszeit sondern darüber hinaus auch zu unterschiedlichen Leitungslängen für die Schaltungsteile für unterschiedliche Polaritäten der anliegenden Spannung, was wiederum bei einem Abschaltvorgang zu ungleichen Bedingungen und Verhalten für die unterschiedlichen Polaritäten führt. Durch die gegenständlichen Maßnahmen können die für das Kommutieren relevanten Stromwege innerhalb des Niederspannungs-Schutzschaltgeräts verringert werden, wodurch direkt die Kommutierungszeit des Kurzschlussstromes auf die Halbleiterschaltungsanordnung verringert werden kann, wobei zudem identische Bedingungen für unterschiedliche Polaritäten geschaffen werden können. Dadurch kann ein schnelles Abschalten eines Kurzschlusses erreicht werden, wobei das betreffende Niederspannungs-Schutzschaltgerät mit geringeren Abmessungen umgesetzt werden kann, als beim Stand der Technik. Weiters treten dabei keine Ausgleichsströme innerhalb des Niederspannungs-Schutzschaltgeräts aufgrund unsymmetrischer Zustände auf.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Stromlaufplan eines gegenständlichen Schutzschaltgeräts mit einer ersten Ausführung einer Halbleiterschaltungsanordnung;
Fig. 2 eine zweite Ausführung einer Halbleiterschaltungsanordnung als Stromlaufplan sowie die beiden Seiten einer ersten Ausführung eines Bauteilträgers mit den entsprechenden realen Halbleiterbauteilen der Halbleiterschaltungsanordnung; und
Fig. 3 eine Schnittdarstellung durch eine zweite Ausführung eines Bauteilträgers mit Halbleiterbauteil in Bare Die Technik.

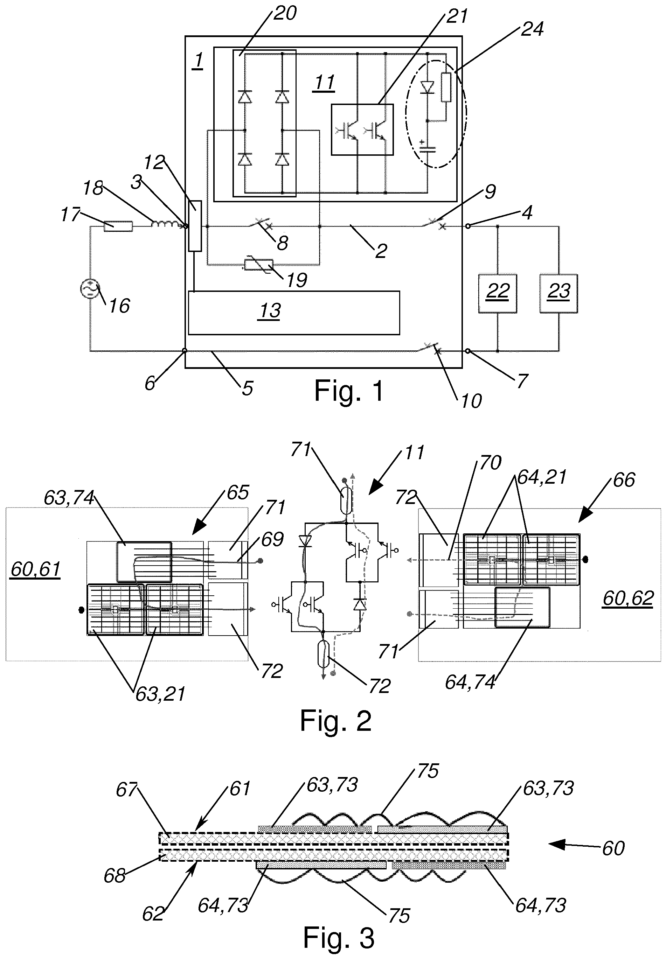

Die Fig. 1 zeigt einen Stromlaufplan bzw. einen Schaltplan einer Ausführungsform eines Niederspannungs-Schutzschaltgeräts 1 mit mindestens einer Außenleiterstrecke 2 von einem Außenleiterversorgungsanschluss 3 des Niederspannungs-Schutzschaltgeräts 1 zu einem Außenleiterlastanschluss 4 des Niederspannungs-Schutzschaltgeräts 1, und einer Neutralleiterstrecke 5 von einem Neutralleiteranschluss 6 des Niederspannungs-Schutzschaltgeräts 1 zu einem Neutralleiterlastanschluss 7 des Niederspannungs-Schutzschaltgeräts 1, wobei in der Außenleiterstrecke 2 ein mechanischer Bypassschalter 8 angeordnet ist, wobei eine Halbleiterschaltungsanordnung 11 des Niederspannungs-Schutzschaltgeräts 1 parallel zum Bypassschalter 8 geschaltet ist, wobei in der Außenleiterstrecke 2 eine Strommessanordnung 12 angeordnet ist, welche mit einer elektronischen Steuereinheit 13 des Schutzschaltgeräts 1 verbunden ist, wobei die elektronische Steuereinheit 13 dazu ausgebildet ist, den Bypassschalter 8 und die erste Halbleiterschaltungsanordnung 11 bei Detektion eines vorgebbaren Überstromes, insbesondere eines Kurzschlussstromes, durch die Strommessanordnung 12 anzusteuern, wobei die Halbleiterschaltungsanordnung 11 wenigstens einen ersten Halbleiterbauteil 63, vorzugsweise eine erste Halbleiterbauteilgruppe 65, aufweist, und wobei die Halbleiterschaltungsanordnung 11 wenigstens einen zweiten Halbleiterbauteil 64, vorzugsweise eine zweite Halbleiterbauteilgruppe 66, aufweist. Ein Niederspannungs-Schutzschaltgerät 1 mit einem derartigen schematischen Aufbau ist etwa aus der WO 2015/028634 A1 bekannt.

Die Fig. 2 und 3 zeigen zwei unterschiedliche Ausführungsformen eines Bauteilträgers, wobei der wenigstens eine erste Halbleiterbauteil 63, vorzugsweise die erste Halbleiterbauteilgruppe 65, auf einer ersten Seite 61 des Bauteilträgers 60 angeordnet sind, und wobei der wenigstens eine zweite Halbleiterbauteil 64, vorzugsweise die zweite Halbleiterbauteilgruppe 66, auf einer, der ersten Seite 61 abgewandten zweiten Seite 62 des Bauteilträgers 60 angeordnet sind.

Dadurch kann ein Niederspannungs-Schutzschaltgerät 1 geschaffen werden, welches eine geringe Belastung der Bauteile, insbesondere des Bypassschalters 8 sowie der Halbleiterschaltungsanordnung 11, und über eine lange Zeit eine hohe Zuverlässigkeit aufweist. Es hat sich gezeigt, dass für das Schaltvermögen insbesondere die Zeit relevant ist, welche der Kurzschlussstrom benötigt um während des Öffnens des Bypassschalters 8 auf die Halbleiterschaltungsanordnung 11 zu kommutieren. Diese Zeit sollte dabei möglichst kurz sein. Für diese sog. Kommutierungszeit ist insbesondere die Geschwindigkeit relevant mit der die Kontakte des Bypassschalters 8 öffnen sowie die relevante Schleifeninduktanz des Niederspannungs-Schutzschaltgeräts 1. Die Schleifeninduktanz wird jedoch maßgeblich durch den realen Aufbau bzw. die Abstände innerhalb des realen Niederspannungs-Schutzschaltgeräts 1 bestimmt. Bekannte Umsetzungen solcher Niederspannungs-Schutzschaltgeräte 1 mit IGBT-Leistungsmodulen weisen einen Aufbau auf, bei welchem die Halbleiterbauteile 63, 64 einseitig auf einem Träger angeordnet sind. Dies führt nicht nur zu langen Leitungswegen- und Schleifen, mit der entsprechenden Verlängerung der Kommutierungszeit sondern darüber hinaus auch zu unterschiedlichen Leitungslängen für die Schaltungsteile für unterschiedliche Polaritäten der anliegenden Spannung, was wiederum bei einem Abschaltvorgang zu ungleichen Bedingungen und Verhalten für die unterschiedlichen Polaritäten führt. Durch die gegenständlichen Maßnahmen können die Stromwege innerhalb des Niederspannungs-Schutzschaltgeräts 1 verringert werden, wodurch direkt die Kommutierungszeit des Kurzschlussstromes auf die Halbleiterschaltungsanordnung 11 verringert werden kann, wobei zudem einfach identische Bedingungen für unterschiedliche Polaritäten geschaffen werden können. Dadurch kann ein schnelles Abschalten eines Kurzschlusses erreicht werden, wobei das betreffende Niederspannungs-Schutzschaltgerät 1 mit geringeren Abmessungen umgesetzt werden kann, als beim Stand der Technik. Weiters treten dabei keine Ausgleichsströme innerhalb des Niederspannungs-Schutzschaltgeräts 1 aufgrund unsymmetrischer Zustände auf.

Bei dem gegenständlichen Schutzschaltgerät 1 wie auch dem Schutzschaltgerät gemäß der WO 2015/028634 A1 handelt es sich um Niederspannungs-Schutzschaltgeräte 1. Als Niederspannung wird wie an sich üblich der Bereich bis 1000V Wechselspannung bzw. 1500V Gleichspannung bezeichnet.

Fig. 1 zeigt ein Schutzschaltgerät mit einem Stromlaufplan gemäß dem Stand der Technik, wie dieses etwa in der WO 2015/028634 A1 beschrieben ist, welcher Stromlaufplan im Wesentlichen auch dem gegenständlichen Niederspannungs-Schutzschaltgerät 1 gemäß einer ersten Ausführungsform entspricht. Dieses weist eine Außenleiterstrecke 2 sowie eine Neutralleiterstrecke 5 auf. Die Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Das Schutzschaltgerät 1 weist bevorzugt ein Isolierstoffgehäuse auf.

In der Außenleiterstrecke 2 ist ein mechanischer Bypassschalter 8 angeordnet. Bevorzugt und wie dargestellt, ist in der Außenleiterstrecke 2 weiters ein erster mechanischer Trennschalter 9, insbesondere seriell zum Bypassschalter 8, angeordnet. In der Neutralleiterstrecke 5 ist bevorzugt ein zweiter mechanischer Trennschalter 10 angeordnet. Parallel zum Bypassschalter 8 ist eine Halbleiterschaltungsanordnung 11 geschaltet.

Bei einem gegenständlichen Niederspannungs-Schutzschaltgerät 1 ist bevorzugt vorgesehen, dass der Bypassschalter 8 als Schalter mit Mehrfachunterbrechung ausgebildet ist.

Weiters ist parallel zum Bypassschalter 8 ein Überspannungsableiter 19 geschaltet.

Das Schutzschaltgerät 1 weist weiters eine Strommessanordnung 12 auf, welche in der Außenleiterstrecke 2 angeordnet ist, und welche bevorzugt umfassend einem Shunt-Widerstand ausgebildet ist.

Die Strommessanordnung 12 ist mit einer elektronischen Steuereinheit 13 des Schutzschaltgeräts 1 verbunden, welche bevorzugt umfassend einen Mikrocontroller bzw. Mikroprozessor ausgebildet ist. Die elektronische Steuereinheit 13 ist dazu ausgebildet, den Bypassschalter 8 und die erste Halbleiterschaltungsanordnung 11, sowie vorzugsweise den ersten mechanischen Trennschalter 9 und den zweiten mechanischen Trennschalter 10, anzusteuern, daher diese vorgebbar zu betätigen bzw. zu schalten. Hiezu ist die elektronische Steuereinheit 13 mit der ersten Halbleiterschaltungsanordnung 11, sowie weiters mit, insbesondere elektromagnetischen, Betätigungselementen der mechanischen Schalter, daher des Bypassschalters 8, des ersten mechanischen Trennschalters 9 und des zweiten mechanischen Trennschalters 10 bevorzugt schaltungstechnisch verbunden. Die entsprechenden Verbindungen ausgehend von der elektronischen Steuereinheit 13 sind nicht in Fig. 1 dargestellt.

Die erste Halbleiterschaltungsanordnung 11 weist bevorzugt eine Gleichrichterschaltung 20, welche bevorzugt als Vollbrücke ausgebildet ist, sowie, bei der gegenständlichen Ausführungsform zwei Leistungshalbleiter 21, welche gegenständlich als IGBT ausgebildet sind, als eigentliche Schalt- bzw. Regelelemente auf.

In Fig. 1 ist neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Beim einem Schaltgerät gemäß Fig. 1, ist vorgesehen, dass ein Abschaltvorgang von dem Bypassschalter 8 und der ersten Halbleiterschaltungsanordnung 11 durchgeführt wird, und die ersten und zweiten Trennschalter 9, 10 lediglich dazu dienen, nach erfolgter Abschaltung eine galvanische Trennung des Lastkreises sicherzustellen.

Es ist bei einem gegenständlichen Niederspannungs-Schutzschaltgerät 1 vorgesehen, dass der wenigstens eine erste Halbleiterbauteil 63, vorzugsweise die erste Halbleiterbauteilgruppe 65, auf einer ersten Seite 61 eines Bauteilträgers 60 angeordnet sind, und dass der wenigstens eine zweite Halbleiterbauteil 64, vorzugsweise die zweite Halbleiterbauteilgruppe 66, auf einer, der ersten Seite 61 abgewandten zweiten Seite 62 des Bauteilträgers 60 angeordnet sind.

Bei dem wenigstens einen ersten und zweiten Halbleiterbauteil 63, 64 bzw. der ersten und zweiten Halbleiterbauteilgruppe 65, 66 handelt es sich bevorzugt um Leistungstransistoren, insbesondere IGBTs 21, sowie Dioden 74, wie in den Fig. 1 und 2 dargestellt. Besonders bevorzugt und wie in Fig. 2 dargestellt, sind die Leistungstransistoren als Back to Back IGBT ausgebildet.

Die gegenständliche Erfindung betrifft die Anordnung der realen Bauteile in einem realen Niederspannungs-Schutzschaltgerät 1. Wenngleich diese mit einer Vielzahl unterschiedlicher Technologien der betreffenden Halbleiterbauteile 63, 64 sowie Schaltung in der diese verschaltet bzw. verdrahtet oder verbunden sind, umgesetzt werden kann, so ist die Schaltungsanordnung gemäß Fig. 2 besonders bevorzugt, da diese einen gegenständlichen Aufbau ohne Durchkontaktierung durch den Bauteilträger ermöglicht.

Es kann vorgesehen sein, dass neben den Halbleiterbauteilen 63, 64 weitere elektrotechnische Bauteile oder Elemente auf dem Bauteilträger 60 angeordnet sind.

Der Bauteilträger 60 erfüllt im Wesentlichen die Aufgaben die auch eine Leiterplatte oder PCB übernimmt. Bevorzugt ist der Bauteilträger 60 als Substrat, insbesondere als Keramiksubstrat, vorzugsweise umfassend bzw. aus Al₂O₃ oder AlN, ausgebildet.

Bevorzugt ist vorgesehen, dass der wenigstens eine erste Halbleiterbauteil 63 und/oder der wenigstens eine zweite Halbleiterbauteil 64, insbesondere die erste Halbleiterbauteilgruppe 65 und/oder die zweite Halbleiterbauteilgruppe 66, jeweils als Bare Die 73 auf dem Bauteilträger 60, insbesondere dem Keramiksubstrat, angeordnet sind. Bare Die 73 bezeichnet dabei in an sich bekannter Weise einen Halbleiterbauteil 63, 64 ohne Gehäuse. Fig. 3 zeigt eine entsprechende Anordnung in Schnittdarstellung, wobei die Verbindung der einzelnen Bare Dies mittels Bondings 75 erfolgt.

Der Bauteilträger 60 kann einstückig ausgebildet sein, oder aber mehrteilig. Fig. 2 zeigt einen einstückigen Bauteilträger 60, wobei beide Seiten des Bauteilträgers 60 dargestellt sind. Links des Stromlaufplanes ist die erste Seite 61 eines Bauteilträgers 60 dargestellt, rechts des Stromlaufplanes ist die zweite Seite 62 des Bauteilträgers 60 dargestellt.

Fig. 3 zeigt eine alternative Ausführung eines Bauteilträgers 60. Der Bauteilträger 60 weist dabei eine erste Bauteilträgerplatte 67 und eine zweite Bauteilträgerplatte 68 auf, wobei auch eine größere Anzahl an Bauteilträgerplatten vorgesehen sein kann, welche gemeinsam den Bauteilträger 60 bilden, insbesondere drei, vier, fünf oder sechs Bauteilträgerplatten. Die erste Seite 61 des Bauteilträgers 60 ist auf der ersten Bauteilträgerplatte 67 angeordnet, und die zweite 62 Seite des Bauteilträgers 60 ist auf der zweiten Bauteilträgerplatte 68 angeordnet. Es handelt sich dabei um zwei an sich körperlich getrennte Bauteilträgerplatten 67, 68, welche gemeinsam den Bauteilträger 60 bilden.

Bevorzugt, und wie in Fig. 3 dargestellt, ist vorgesehen, dass die erste Bauteilträgerplatte 67 parallel zur zweiten Bauteilträgerplatte 68, insbesondere an dieser anliegend, angeordnet ist. Die beiden Bauteilträgerplatten 67, 68 sind dabei in der Art einer Sandwichkonstruktion angeordnet. Dies hat Vorteile bei der Fertigung der betreffenden Baugruppe.

Auf dem Bauteilträger 60 sind wenigstens ein erster Anschluss 71 der Halbleiterschaltungsanordnung 11 sowie ein zweiten Anschluss 72 der Halbleiterschaltungsanordnung 11 angeordnet. Die beiden Anschlüsse sind dabei insbesondere an Randbereichen des Bauteilträgers 60 angeordnet.

Besonders bevorzugt ist vorgesehen, dass der wenigstens eine erste Halbleiterbauteil (63), vorzugsweise die erste Halbleiterbauteilgruppe (65), für eine erste Spannungspolarität vorgesehen bzw. in der Schaltung an entsprechender Stelle angeordnet ist, und dass der wenigstens eine zweite Halbleiterbauteil (64), vorzugsweise die zweite Halbleiterbauteilgruppe (66), für eine zweite Spannungspolarität vorgesehen bzw. in der Schaltung an entsprechender Stelle angeordnet ist.

In diesem Zusammenhang ist daher vorgesehen, dass auf der ersten Seite 61 des Bauteilträgers 60 der Teil der Halbleiterschaltungsanordnung 11 angeordnet ist, welcher für die erste Polarität, etwa "positiv", einer anliegenden Spannung vorgesehen bzw. ausgebildet ist, und dass auf der zweiten Seite 62 des Bauteilträgers 60 der Teil der Halbleiterschaltungsanordnung 11 angeordnet ist, welcher für die zweite Polarität, etwa "negativ", einer anliegenden Spannung vorgesehen bzw. ausgebildet ist.

Die Halbleiterschaltungsanordnung 11 weist einen ersten Strompfad 69 auf der ersten Seite 61 des Bauteilträgers 60, sowie einen zweiten Strompfad 70 auf der zweiten Seite 62 des Bauteilträgers 60 auf. Der erste Strompfad 69 verläuft dabei bevorzugt vom ersten Anschluss 71 zum zweiten Anschluss 72 durch das wenigstens eine erste Halbleiterbauteil 63, vorzugsweise die erste Halbleiterbauteilgruppe 65. Der zweite Strompfad 70 verläuft bevorzugt vom ersten Anschluss 71 zum zweiten Anschluss 72 durch das wenigstens eine zweite Halbleiterbauteil 64, vorzugsweise die zweite Halbleiterbauteilgruppe 66. Die jeweiligen Halbleiterbauteile 63, 64 sind daher auch Teil des jeweiligen Strompfades 69, 70 und entsprechend bei den nachfolgenden Angaben zur Ausgestaltung der Strompfade 69, 70 mit zu berücksichtigen, insbesondere hinsichtlich der Länge, Form und Induktanz.

Bevorzugt ist vorgesehen, dass der erste Strompfad 69 und der zweite Strompfad 70 im Wesentlichen dieselbe Form und/oder Länge aufweisen. Dadurch kann einfach ein annähern bzw. möglichst identisches Verhalten je Polarität erreicht werden.

Besonders bevorzugt ist vorgesehen, dass der erste Strompfad 69 und der zweite Strompfad 70 im Wesentlichen dieselbe Schleifeninduktanz aufweisen. Dabei können die beiden Strompfade 69, 70 hinsichtlich Abmessungen auch unterschiedlich ausgebildet sein, solange die Induktanz, insbesondere der induktive Widerstand, im Wesentlichen gleich sind.

Zusammenfassend ist bevorzugt vorgesehen, dass der erste Strompfad 69 und der zweite Strompfad 70 im Wesentlichen gleichartig bzw. spiegelsymmetrisch ausgebildet sind.

## Patentansprüche

1. Niederspannungs-Schutzschaltgerät (1) mit mindestens einer Außenleiterstrecke (2) von einem Außenleiterversorgungsanschluss (3) des Niederspannungs-Schutzschaltgeräts (1) zu einem Außenleiterlastanschluss (4) des Niederspannungs-Schutzschaltgeräts (1), und einer Neutralleiterstrecke (5) von einem Neutralleiteranschluss (6) des Niederspannungs-Schutzschaltgeräts (1) zu einem Neutralleiterlastanschluss (7) des Niederspannungs-Schutzschaltgeräts (1), wobei in der Außenleiterstrecke (2) ein mechanischer Bypassschalter (8) angeordnet ist, wobei eine Halbleiterschaltungsanordnung (11) des Niederspannungs-Schutzschaltgeräts (1) parallel zum Bypassschalter (8) geschaltet ist, wobei in der Außenleiterstrecke (2) eine Strommessanordnung (12) angeordnet ist, welche mit einer elektronischen Steuereinheit (13) des Schutzschaltgeräts (1) verbunden ist, wobei die elektronische Steuereinheit (13) dazu ausgebildet ist, den Bypassschalter (8) und die erste Halbleiterschaltungsanordnung (11) bei Detektion eines vorgebbaren Überstromes durch die Strommessanordnung (12) anzusteuern, wobei die Halbleiterschaltungsanordnung (11) wenigstens einen ersten Halbleiterbauteil (63) aufweist, und wobei die Halbleiterschaltungsanordnung (11) wenigstens einen zweiten Halbleiterbauteil (64) aufweist, **dadurch gekennzeichnet, dass** der wenigstens eine erste Halbleiterbauteil (63) auf einer ersten Seite (61) eines Bauteilträgers (60) angeordnet sind, und dass der wenigstens eine zweite Halbleiterbauteil (64) auf einer, der ersten Seite (61) abgewandten zweiten Seite (62) des Bauteilträgers (60) angeordnet sind.

2. Niederspannungs-Schutzschaltgerät (1) nach Anspruch 1, **dadurch gekennzeichnet, dass** die Halbleiterschaltungsanordnung (11) eine erste Halbleiterbauteilgruppe (65) und/oder eine zweite Halbleiterbauteilgruppe (66) umfasst, wobei das ersten Halbleiterbauteil (63) Teil der ersten Halbleiterbauteilgruppe (65) ist, und wobei das zweite zweiten Halbleiterbauteil (64) Teil der zweiten Halbleiterbauteilgruppe (66) ist.

3. Niederspannungs-Schutzschaltgerät (1) nach Anspruch 1 oder 2, **dadurch gekennzeichnet, dass** der Bauteilträger (60) einstückig ausgebildet ist.

4. Niederspannungs-Schutzschaltgerät (1) nach Anspruch 3, **dadurch gekennzeichnet, dass** der Bauteilträger (60) als einstückiges Keramiksubstrat ausgebildet ist.

5. Niederspannungs-Schutzschaltgerät (1) nach Anspruch 1 oder 2, **dadurch gekennzeichnet, dass** der Bauteilträger (60) wenigstens eine erste Bauteilträgerplatte (67) und eine zweite Bauteilträgerplatte (68) aufweist, dass die erste Seite (61) des Bauteilträgers (60) auf der ersten Bauteilträgerplatte (67) angeordnet ist, dass die zweite (62) Seite des Bauteilträgers (60) auf der zweiten Bauteilträgerplatte (68) angeordnet ist.

6. Niederspannungs-Schutzschaltgerät (1) nach Anspruch 5, **dadurch gekennzeichnet, dass** die erste Bauteilträgerplatte (67) parallel zur zweiten Bauteilträgerplatte (68), insbesondere an dieser anliegend, angeordnet ist.

7. Niederspannungs-Schutzschaltgerät (1) nach Anspruch 5 oder 6, **dadurch gekennzeichnet, dass** die erste Bauteilträgerplatte (67) und die zweite Bauteilträgerplatte (68) als Keramiksubstrat ausgebildet sind.

8. Niederspannungs-Schutzschaltgerät (1) nach einem der Ansprüche 1 bis 7, **dadurch gekennzeichnet, dass** die erste Halbleiterbauteilgruppe (65) und die zweite Halbleiterbauteilgruppe (66) jeweils wenigstens einen Leistungstransistor, insbesondere einen IGBT (21), vorzugsweise jeweils Back to Back IGBT, und eine Diode (74) umfassen.

9. Niederspannungs-Schutzschaltgerät (1) nach einem der Ansprüche 1 bis 8, **dadurch gekennzeichnet, dass** die Halbleiterschaltungsanordnung (11) einen ersten Strompfad (69) auf der ersten Seite (61) des Bauteilträgers (60) aufweist, dass die Halbleiterschaltungsanordnung (11) einen zweiten Strompfad (70) auf der zweiten Seite (62) des Bauteilträgers (60) aufweist, und dass der erste Strompfad (69) und der zweite Strompfad (70) im Wesentlichen dieselbe Form und/oder Länge aufweisen.

10. Niederspannungs-Schutzschaltgerät (1) nach einem der Ansprüche 1 bis 9, **dadurch gekennzeichnet, dass** die Halbleiterschaltungsanordnung (11) einen ersten Strompfad (69) auf der ersten Seite (61) des Bauteilträgers (60) aufweist, dass die Halbleiterschaltungsanordnung (11) einen zweiten Strompfad (70) auf der zweiten Seite (62) des Bauteilträgers (60) aufweist, und dass der erste Strompfad (69) und der zweite Strompfad (70) im Wesentlichen dieselbe Schleifeninduktanz aufweisen.

11. Niederspannungs-Schutzschaltgerät (1) nach Anspruch 10, **dadurch gekennzeichnet, dass** der erste Strompfad (69) und der zweite Strompfad (70) im Wesentlichen gleichartig ausgebildet sind.

12. Niederspannungs-Schutzschaltgerät (1) nach einem der Ansprüche 1 bis 11, **dadurch gekennzeichnet, dass** die Halbleiterschaltungsanordnung (11) einen ersten Anschluss (71) auf dem Bauteilträger (60) und einen zweiten Anschluss (72) auf dem Bauteilträger (60) aufweist.

13. Niederspannungs-Schutzschaltgerät (1) nach Anspruch 12 und einem der Ansprüche 10 oder 11, **dadurch gekennzeichnet, dass** der erste Strompfad (69) vom ersten Anschluss (71) zum zweiten Anschluss (72) durch das wenigstens eine erste Halbleiterbauteil (63) verläuft, und dass der zweite Strompfad (70) vom ersten Anschluss (71) zum zweiten Anschluss (72) durch das wenigstens eine zweite Halbleiterbauteil (64) verläuft.

14. Niederspannungs-Schutzschaltgerät (1) nach einem der Ansprüche 1 bis 13, **dadurch gekennzeichnet, dass** der wenigstens eine erste Halbleiterbauteil (63) und/oder der wenigstens eine zweite Halbleiterbauteil (64) jeweils als Bare Die (73) auf dem Bauteilträger (60) angeordnet sind.

15. Niederspannungs-Schutzschaltgerät (1) nach einem der Ansprüche 1 bis 14, **dadurch gekennzeichnet, dass** der wenigstens eine erste Halbleiterbauteil (63) für eine erste Spannungspolarität vorgesehen ist, und dass der wenigstens eine zweite Halbleiterbauteil (64) für eine zweite Spannungspolarität vorgesehen ist.

## Claims

1. Low-voltage circuit breaker device (1), having at least one outer conductor path (2) from an outer conductor supply terminal (3) of the low-voltage circuit breaker device (1) to an outer conductor load terminal (4) of the low-voltage circuit breaker device (1), and a neutral conductor path (5) from a neutral conductor terminal (6) of the low-voltage circuit breaker device (1) to a neutral conductor load terminal (7) of the low-voltage circuit breaker device (1), wherein a mechanical by-pass switch (8) is arranged in the outer conductor path (2), wherein a semiconductor circuit arrangement (11) of the low-voltage circuit breaker device (1) is connected parallel to the bypass switch (8), wherein in the outer conductor path (2) a current measurement arrangement (12) is arranged, which is connected to an electronic control unit (13) of the circuit breaker device (1), wherein the electronic control unit (13) is configured to actuate the by-pass switch (8) and the first semiconductor circuit arrangement (11) on detection of a predefinable overload current by the current measurement arrangement (12), wherein the semiconductor circuit arrangement (11) has at least one first semiconductor component (63), and wherein the semiconductor circuit arrangement (11) has at least one second semiconductor component (64), **characterised in that** the at least one first semiconductor component (63) is arranged on a first side (61) of a component carrier (60), and **in that** the at least one second semiconductor component (64) is arranged on a second side (62) of the component carrier (60) facing away from the first side (61).

2. Low-voltage circuit breaker device (1) according to claim 1, **characterised in that** the semiconductor circuit arrangement (11) comprises a first semiconductor component group (65) and/or a second semiconductor component group (66), wherein the semiconductor component (63) is part of the first semiconductor component group (65), and wherein the second second semiconductor component (64) is part of the second semiconductor component group (66).

3. Low-voltage circuit breaker device (1) according to claim 1 or 2, **characterised in that** the component carrier (60) is designed in one piece.

4. Low-voltage circuit breaker device (1) according to claim 3, **characterised in that** the component carrier (60) is designed as a one-piece ceramic substrate.

5. Low-voltage circuit breaker device (1) according to claim 1 or 2, **characterised in that** the component carrier (60) has at least one first component carrier plate (67) and one second component carrier plate (68), **in that** the first side (61) of the component carrier (60) is arranged on the first component carrier plate (67), and **in that** the second side (62) of the component carrier (60) is arranged on the second component carrier plate (68).

6. Low-voltage circuit breaker device (1) according to claim 5, **characterised in that** the first component carrier plate (67) is arranged parallel to the second component carrier plate (68), in particular bearing against the latter.

7. Low-voltage circuit breaker device (1) according to claim 5 or 6, **characterised in that** the first component carrier plate (67) and the second component carrier plate (68) are designed with a ceramic substrate.

8. Low-voltage circuit breaker device (1) according to any of claims 1 to 7, **characterised in that** the first semiconductor component group (65) and the second semiconductor component group (66) comprise respectively at least one power transistor, in particular an IGBT (21), preferably a back-to-back IGBT, and a diode (74).

9. Low-voltage circuit breaker device (1) according to any of claims 1 to 8, **characterised in that** the semiconductor circuit arrangement (11) has a first current path (69) on the first side (61) of the component carrier (60), **in that** the semiconductor circuit arrangement (11) has a second current path (70) on the second side (62) of the component carrier (60) and **in that** the first current path (69) and the second current path (70) have substantially the same shape and/or length.

10. Low-voltage circuit breaker device (1) according to any of claims 1 to 9, **characterised in that** the semiconductor circuit arrangement (11) has a first current path (69) on the first side (61) of the component carrier (60), **in that** the semiconductor circuit arrangement (11) has a second current path (70) on the second side (62) of the component carrier (60), and **in that** the first current path (69) and the second current path (70) have substantially the same loop inductance.

11. Low-voltage circuit breaker device (1) according to claim 10, **characterised in that** the first current path (69) and the second current path (70) are configured to be substantially identical.

12. Low-voltage circuit breaker device (1) according to any of claims 1 to 11, **characterised in that** the semiconductor circuit arrangement (11) has a first terminal (71) on the component carrier (60) and a second terminal (72) on the component carrier (60).

13. Low-voltage circuit breaker device (1) according to claim 12 and one of claims 10 or 11, **characterised in that** the first current path (69) proceeds from the first terminal (71) to the second terminal (72) through the at least one first semiconductor component (63), and **in that** the second current path (70) proceeds from the first terminal (71) to the second terminal (72) through the at least one second semiconductor component (64).

14. Low-voltage circuit breaker device (1) according to any of claims 1 to 13, **characterised in that** the at least one first semiconductor component (63) and/or the at least one second semiconductor component (64) are arranged respectively as bare die (73) on the component carrier (60).

15. Low-voltage circuit breaker device (1) according to any of claims 1 to 14, **characterised in that** the at least one first semiconductor component (63) is provided for a first voltage polarity, and **in that** the at least one second semiconductor component (64) is provided for a second voltage polarity.

## Revendications

1. Disjoncteur de protection basse tension (1) avec au moins une section de conducteur extérieur (2) depuis un raccord d'alimentation de conducteur extérieur (3) du disjoncteur de protection basse tension (1) jusqu'à un raccord de charge de conducteur extérieur (4) du disjoncteur de protection basse tension (1), et une section de conducteur neutre (5) depuis un raccord de conducteur neutre (6) du disjoncteur de protection basse tension (1) jusqu'à un raccord de charge de conducteur neutre (7) du disjoncteur de protection basse tension (1), dans lequel dans la section de conducteur extérieur (2), un commutateur de dérivation mécanique (8) est disposé, dans lequel un dispositif de commutation à semi-conducteur (11) du disjoncteur de protection basse tension (1) est connecté en parallèle au commutateur de dérivation (8), dans lequel dans la section de conducteur extérieur (2), un dispositif de mesure de courant (12) est disposé, lequel est raccordé à une unité de commande électronique (13) du disjoncteur de protection (1), dans lequel l'unité de commande électronique (13) est configurée pour commander le commutateur de dérivation (8) et le premier dispositif de commutation à semi-conducteur (11) lors de la détection d'une surintensité prédéfinissable à travers le dispositif de mesure de courant (12), dans lequel le dispositif de commutation à semi-conducteur (11) présente au moins un premier composant à semi-conducteur (63), et dans lequel le dispositif de commutation à semi-conducteur (11) présente au moins un second composant à semi-conducteur (64), **caractérisé en ce que** le au moins un premier composant à semi-conducteur (63) est disposé sur un premier côté (61) d'un support de composant (60), et **en ce que** le au moins un second composant à semi-conducteur (64) est disposé sur un second côté (62) du support de composant (60) opposé au premier côté (61).

2. Disjoncteur de protection basse tension (1) selon la revendication 1, **caractérisé en ce que** le dispositif de commutation à semi-conducteur (11) comprend un premier groupe de composants à semi-conducteur (65) et/ou un second groupe de composants à semi-conducteur (66), dans lequel le premier composant à semi-conducteur (63) fait partie du premier groupe de composants à semi-conducteur (65), et dans lequel le second second composant à semi-conducteur (64) fait partie du second groupe de composants à semi-conducteur (66).

3. Disjoncteur de protection basse tension (1) selon la revendication 1 ou 2, **caractérisé en ce que** le support de composant (60) est configuré en une pièce.

4. Disjoncteur de protection basse tension (1) selon la revendication 3, **caractérisé en ce que** le support de composant (60) est configuré sous la forme d'un substrat céramique en une pièce.

5. Disjoncteur de protection basse tension (1) selon la revendication 1 ou 2, **caractérisé en ce que** le support de composant (60) présente au moins une plaque de support de composant (67) et une seconde plaque de support de composant (68), **en ce que** le premier côté (61) du support de composant (60) est disposé sur la première plaque de support de composant (67), **en ce que** le second côté (62) du support de composant (60) est disposé sur la seconde plaque de support de composant (68).

6. Disjoncteur de protection basse tension (1) selon la revendication 5, **caractérisé en ce que** la première plaque de support de composant (67) est disposée parallèlement à la seconde plaque de support de composant (68), en particulier de manière adjacente à celle-ci.

7. Disjoncteur de protection basse tension (1) selon la revendication 5 ou 6, **caractérisé en ce que** la première plaque de support de composant (67) et la seconde plaque de support de composant (68) sont configurées sous la forme d'un substrat céramique.

8. Disjoncteur de protection basse tension (1) selon l'une des revendications 1 à 7, **caractérisé en ce que** le premier groupe de composants à semi-conducteur (65) et le second groupe de composants à semi-conducteur (66) comprennent respectivement au moins un transistor de puissance, en particulier un IGBT (21), de préférence respectivement un IGBT back to back, et une diode (74).

9. Disjoncteur de protection basse tension (1) selon l'une des revendications 1 à 8, **caractérisé en ce que** le dispositif de commutation à semi-conducteur (11) présente un premier trajet de courant (69) sur le premier côté (61) du support de composant (60), **en ce que** le dispositif de commutation à semi-conducteur (11) présente un second trajet de courant (70) sur le second côté (62) du support de composant (60), et **en ce que** le premier trajet de courant (69) et le second trajet de courant (70) présentent essentiellement la même forme et/ou longueur.

10. Disjoncteur de protection basse tension (1) selon l'une des revendications 1 à 9, **caractérisé en ce que** le dispositif de commutation à semi-conducteur (11) présente un premier trajet de courant (69) sur le premier côté (61) du support de composant (60), **en ce que** le dispositif de commutation à semi-conducteur (11) présente un second trajet de courant (70) sur le second côté (62) du support de composant (60), et **en ce que** le premier trajet de courant (69) et le second trajet de courant (70) présentent essentiellement la même inductance de boucle.

11. Disjoncteur de protection basse tension (1) selon la revendication 10, **caractérisé en ce que** le premier trajet de courant (69) et le second trajet de courant (70) sont essentiellement configurés de façon similaire.

12. Disjoncteur de protection basse tension (1) selon l'une des revendications 1 à 11, **caractérisé en ce que** le dispositif de commutation à semi-conducteur (11) présente un premier raccord (71) sur le support de composant (60) et un second raccord (72) sur le support de composant (60).

13. Disjoncteur de protection basse tension (1) selon la revendication 12 et l'une des revendications 10 ou 11, **caractérisé en ce que** le premier trajet de courant (69) chemine depuis le premier raccord (71) jusqu'au second raccord (72) à travers le au moins un premier composant à semi-conducteur (63), et **en ce que** le second trajet de courant (70) chemine depuis le premier raccord (71) jusqu'au second raccord (72) à travers le au moins un second composant à semi-conducteur (64),

14. Disjoncteur de protection basse tension (1) selon l'une des revendications 1 à 13, **caractérisé en ce que** le au moins un premier composant à semi-conducteur (63) et/ou le au moins un second composant à semi-conducteur (64) sont disposés respectivement sous la forme de puce nue (73) sur le support de composant (60).

15. Disjoncteur de protection basse tension (1) selon l'une des revendications 1 à 14, **caractérisé en ce que** le au moins un premier composant à semi-conducteur (63) est prévu pour une première polarité de tension, et **en ce que** le au moins un second composant à semi-conducteur (64) est prévu pour une seconde polarité de tension.
